# EUROPEAN PATENT APPLICATION

(11) **EP 2 523 526 A1**
(43) Date of publication of application: **14.11.2012**
(21) Application number: 10841924.3
(22) Date of filing: 28.07.2010
(51) Int. Cl.: H04W 88/08

(54) **METHOD AND SYSTEM FOR MANAGING CONFIGURATION OF NETWORK MANAGEMENT DATA**

(30) Priority: 08.01.2010 CN 201010002389
(71) Applicant: ZTE Corporation, Shenzhen, Guangdong 518057 (CN)
(72) Inventor: WEN, Li, Guangdong 518057 (CN); HU, Jiawang, Guangdong 518057 (CN); ZHU, Lifeng, Guangdong 518057 (CN)
(74) Representative: Novagraaf Technologies
(86) International application number: PCT/CN2010/075522
(87) International publication number: WO 2011/082581

(57) **Abstract**

The present invention discloses a method and system for configuring and managing network management data. In the above method, a BSC receives dynamic data from an HCS, wherein this dynamic data carries the adjacent cell parameter information of the BTS, and the adjacent cell parameter information contains a pre-set template number; the BSC receives static data from an OMCR, wherein this static data carries a physical succession parameter and wireless parameter template information and the static data contains a pre-set template number; and the BSC adapts the static data and dynamic data according to the pre-set template numbers in the static data and dynamic data and stores them in a database of the BSC. The technical solution provided according to the present invention solves the problem that it is difficult for the network management configuration maintenance procedure in relevant art to meet the scenarios of large scale deployment and flexible application based on a pico base station, thus being able to effectively meet the data configuration requirements of the pico base station.

## Description

### Field of the Invention

The present invention relates to the communication field, and in particular to a method and system for configuring and managing network management data.

### Background of the Invention

In the global system for mobile communication (abbreviated as GSM), the radio access network equipment is generally referred to as a base station subsystem (abbreviated as BSS). A typical BSS includes two logic nodes: a base station controller (abbreviated as BSC) and a base transceiver station (abbreviated as BTS). The premise of the communication between them is the reasonable configuration of physical succession relationship and wireless data, and the main responsibility of network management lies in this.

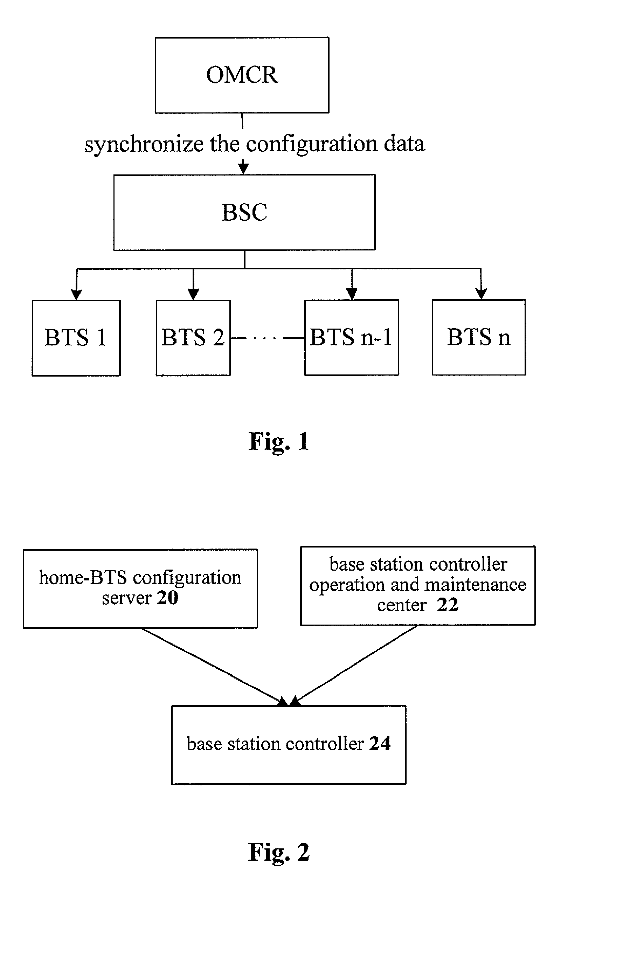

The process of conventional network management data configuration is as shown in Fig. 1. The configuration of relevant data such as physical data, the data of the base station, wireless data, etc. is performed by an operation and maintenance center (abbreviated as OMCR) of the BSC. The generated data is synchronized to the BSC by manner of data synchronization, and then the BSC sends the configuration data to the BTS to enable the BTS to work normally. The OMCR must repeat the above operations to change and update the data, so as to enable the BTS to re-acquire normal and valid data. It can be seen from the above that the conventional configuration procedure is linear. However, with the rapid development of mobile communication technologies, a large scale of plug-and-play IP pico base stations emerge as the time requires. It is difficult for the conventional network management configuration and maintenance procedure to meet the scenarios of large scale deployment and flexible application based on the pico base station. Thus, it affects the efficiency of system configuration and maintenance to a great extent.

### Summary of the Invention

As to the problem that it is difficult for the network management configuration and maintenance procedure in relevant art to meet the scenarios of the large scale deployment and flexible application based on the pico base station, the present invention provides a method and system for configuring and managing network management data so as to solve at least one of the above problems.

A method for configuring and managing network management data is provided according to one aspect of the present invention.

The method for configuring and managing network management data according to the present invention comprises: a base station controller (BSC) receiving dynamic data from a home-BTS configuration server (abbreviated as HCS), wherein the dynamic data carries adjacent cell parameter information of the base transceiver station (BTS), and the adjacent cell parameter information contains a pre-set template number; the BSC receiving static data from a base station controller operation and maintenance center (OMCR), wherein this static data carries a physical succession parameter and wireless parameter template information and the static data contains a pre-set template number; and the BSC adapting the static data and dynamic data according to the pre-set template numbers in the dynamic data and static data and storing them in a database of the BSC.

A system for configuring and managing network management data is provided according to another aspect of the present invention.

The system for configuring and managing network management data according to the present invention comprises: a home-BTS configuration server (HCS) configured for sending dynamic data to a base station controller (BSC), wherein the dynamic data carries the adjacent cell parameter information of a BTS, and the adjacent cell parameter information contains a pre-set template number; a base station controller operation and maintenance center (OMCR) configured for sending static data to the BSC, wherein the static data carries a physical succession parameter and wireless parameter template information and the static data contains a pre-set template number; and the BSC configured for adapting the static data and the dynamic data according to the pre-set template numbers in the dynamic data and the static data and storing them in a database of the BSC.

By the present invention, the static data is configured in an OMCR module, such as a wireless parameter template, etc.; the dynamic data is configured in the HCS, such as the working frequency point of BTS, etc.; and finally a set of integrated data is obtained by adaption of the BSC. Thus, the configuration procedure of all data is achieved. The problem that it is difficult for the network management configuration and maintenance procedure in relevant art to meet the scenarios of the large scale deployment and flexible application based on the pico base station is solved. And, it can effectively meet the data configuration requirements of the pico base station.

### Brief Description of the Drawings

The drawings illustrated here provide a further understanding of the present invention and form a part of the present application. The exemplary embodiments and the description thereof are used to explain the present invention without unduly limiting the scope of the present invention.

In the drawings:
Fig. 1 is a schematic diagram of the architecture of a system for configuring and managing network management data according to relevant art;
Fig. 2 is a block diagram of the structure of a system for configuring and managing network management data according to the embodiment of the present invention;
Fig. 3 is a block diagram of the structure of a system for configuring and managing network management data according to the preferred embodiment of the present invention;
Fig. 4 is a flow chart of a method for configuring and managing network management data according to the embodiment of the present invention;
Fig. 5 is a flow chart of a method for configuring and managing network management data according to the preferred embodiment of the present invention;
Fig. 6 is a flow chart of a method for configuring and managing network management data according to the example of the present invention; and
Fig. 7 is a main sequence diagram of data reverse construction according to the example of the present invention.

### Detailed Description of the Embodiments

The present invention is described in detail hereinafter with reference to the drawings and in combination with the embodiments. It should be explained that the embodiments of the present invention and the features of the embodiments can be combined with each other if there is no conflict.

Fig. 2 is a block diagram of the structure of a system for configuring and managing network management data according to the embodiment of the present invention. As shown in Fig. 2, the system for configuring and managing network management data according to the embodiment of the present invention comprises: a home-BTS configuration server (HCS) **20**, a base station controller operation and maintenance center (OMCR) **22**, and a base station controller (BSC) **24.**

The HSC **20** is used for sending dynamic data to the BSC, wherein the dynamic data carries the adjacent cell parameter information of the BTS, with this adjacent cell parameter information containing a pre-set template number;

The OMCR **22** is used for sending static data to the BSC, wherein the static data carries a physical succession parameter and wireless parameter template information and this static data contains a pre-set template number; and

The BSC **24**, connected to the HSC **20** and OMCR **22** respectively, is used for adapting the static data and dynamic data according to the pre-set template numbers in the static data and dynamic data and storing them in a database of the BSC.

By this system, the configuration of network management data is achieved. It can relieve the working load of the OMCR, is suitable for the scenarios that a large amount of the pico base stations are deployed and flexibly applied, and can effectively meets the data configuration requirements of the pico base station. Thus user experience is improved.

Preferably, the above HCS **20** is further configured for receiving a power-up request message from the BTS, determining the BSC to be accessed by the BTS through data check, sending the identification information of the BSC to be accessed and the pre-configured frequency point information of the BTS to the BTS to achieve subsequent access, and configuring the adjacent cell parameter information of the BTS.

During the specific implementation, the HCS completes the configuration and management operation on the basic data of the BSC object and the BTS object. After the BTS is powered-up, the HCS will provide such information as the working frequency point necessary for the operation of the BTS, the address necessary for the BTS to access the BSC, etc., so as to ensure that the BTS is able to access the BSC normally. In this case, the HCS further provides the configuration of such wireless parameter information as the adjacent cell parameter of the BTS, etc., and then synchronizes these configuration data to the BSC so as to complete the entire data configuration procedure by the BSC.

Preferably, the above OMCR **22** is further configured for storing the static data into an OMCR database after having configured the static data.

Preferably, the above BSC **24** is further configured for receiving an access request from the BTS, establishing connection with the BTS after having performed identity verification on the BTS, and sending adapted data to the BTS after performing data check on the parameter information from the BTS, wherein the parameter information of the BTS includes: the identification information of the BSC.

The OMCR **22** is further configured for acquiring the latest site data from a database of the BSC after having received a data reverse construction notification from the BSC and storing them into the database of the OMCR.

By the above data reverse construction process, the OMCR acquires the latest site data from the database of the BSC and stores it in the database. Thus, it can achieve the consistent management and maintenance of all configuration data.

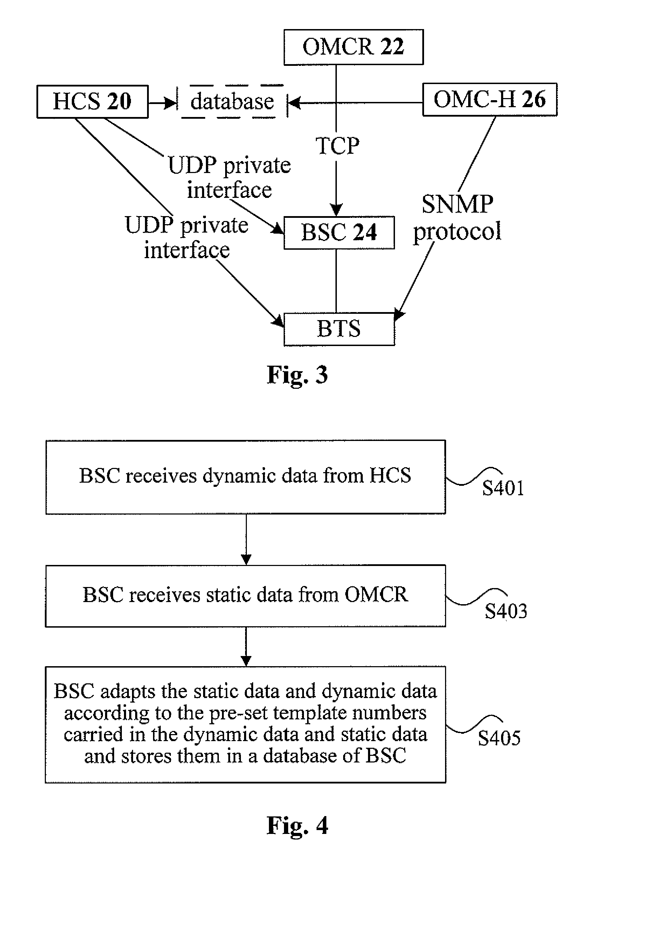

Preferably, as shown in Fig. 3, the system can further comprise: a home-BTS operation and maintenance center (abbreviated as OMC-H) **26**, used for acquiring the identification information and/or common gateway interface information of the BTS from the HSC, establishing remote connection with the BTS according to the identification information and/or common gateway interface information of the BTS, and performing the processing of fault shooting on the BTS.

During the specific implementation, the OMC-H is mainly suitable for the following scenario: when a fault occurs at the BTS and the user complained, the operator maintenance personnel perform fault shooting on a specific BTS by this module. The OMC-H partly acquires such information as device identification, IP address of the BTS, etc. from the HCS by a database. The failed BTS is remotely connected according to the acquired information, to collect and sort the fault information and to provide important data of fault analysis and location for the operating and maintenance personnel.

It should be noted that the above network management data configuration system not only can meet the data configuration and maintenance requirements of the pico base station, and also can be used to configure the network management data of other base stations if there is no conflict.

Fig. 4 is a flow chart of a method for configuring and managing network management data according to the embodiment of the present invention. As shown in Fig. 4, the method for configuring network management data according to the embodiment of the present invention comprises the following process (steps S401 to S405):
step S401: a base station controller (BSC) receives dynamic data from a home-BTS configuration server (HCS), wherein the dynamic data carries the adjacent cell parameter information of a base transceiver station (BTS), and the adjacent cell parameter information contains a pre-set template number;
step S403: the BSC receives static data from the operation and maintenance center (OMCR) of the base station controller, wherein the static data carries a physical succession parameter and wireless parameter template information and the static data contains a pre-set template number; and
step S405: the BSC adapts the static data and dynamic data according to the pre-set template numbers in the static data and dynamic data and stores them in a database of the BSC.

By the above method, the configuration of network management data can be achieved. It can relieve the working load of the OMCR, is suitable for the scenarios that a large amount of the pico base stations are deployed and flexibly applied, and can effectively meets the data configuration requirements of the pico base station.

During the specific implementation, the performing order of the above steps S401 and S403 are not limited.

Preferably, before performing step S401, the following process can be further comprised.
(1) The HCS receives a power-up request message from the BTS, wherein the power-up request message carries the identification information and common gateway interface information of the BTS.
   During the specific implementation, after the BTS is powered-up, the BTS first sends a power-up request message to the HCS, wherein this request carries the identification information of the BTS for performing authentication on the BTS identity and determining whether it is valid; and this request further carries the common gateway interface (abbreviated as CGI) information of the BTS so that the HCS determines according to the
   CGI information the BSC which the BTS accesses.
(2) The HCS determines the BSC to be accessed by the BTS through data check.
(3) The HCS sends to the BTS the identification information of the BSC to be accessed and the pre-configured frequency point information of the BTS, to achieve subsequent access.
(4) The HCS configures the adjacent cell parameter information of the BTS.

Preferably, before performing step S403, the following process is further comprised: after having configured the above static data, the OMCR stores the static data into the OMCR database.

During the specific implementation, the OMCR configures the succession relationship, office direction, wireless parameter template and template number of the physical single board. The template number and the adjacent cell information template number configured by the HCS are adaptation interfaces with uniform specifications, so that the BSC can adapt data by the template number. Then, the configured static data is synchronized to the BSC by a manner of entire table or increment synchronization.

Preferably, after having performed step S405, the following process can be further comprised:
(1) the BSC receives an access request from the BTS;
(2) after having performed identity verification on the BTS, the BSC establishes connection with the BTS;
(3) the BSC performs data check on the parameter information from the BTS, wherein the parameter information of the BTS includes: the identification information of the BSC; and
(4) the BSC sends the adapted data to the BTS.

During the specific implementation, the data check module in the BSC will check the parameters of the accessed BTS and determine whether some basic parameters (including parameters such as the link number, BSCID identification, etc.) of the BTS itself is valid. The BSC allocates individualized data (i.e. adjacent cell parameter information) to the BTS by a data allocation module.

Preferably, during the BSC is sending the adapted data to the BTS, the following process can be further comprised:
(1) the OMCR receives a data reverse construction notification from the BSC; and
(2) the OMCR acquires the latest site data from the database of the BSC and synchronizes them into a database of the OMCR.

During the specific implementation, when the BSC is allocating individualized data to the BTS, the BSC triggers a data notification module, which is used for notifying the OMCR to acquire the latest site data from the BSC. Specifically, the OMCR only stores the configured static data. However, the OMCR needs to achieve the maintenance of all data (also including dynamic data). Therefore the OMCR needs to perform data reverse construction operation, i.e. acquire the latest site data from the database of the BSC and synchronize them to the database of the OMCR.

Preferably, when a fault occurs at the base station side, the following process can be further comprised:
(1) the OMC-H acquires the identification information and/or common gateway interface information of the BTS from the HCS; and
(2) the OMC-H establishes remote connection with the BTS according to the identification information and/or common gateway interface information of the BTS, and performs the processing of fault shooting on the BTS.

Performing fault shooting and information collection by means of the above remote connection can effectively achieve locating and solving the fault. It simplifies the operation and maintenance procedure and improves user experience.

It has to be noted that the above method for configuring network management data not only can meet the data configuration and maintenance requirements of the pico base station, and also can be used to configure the network management data of other base stations if there is no conflict.

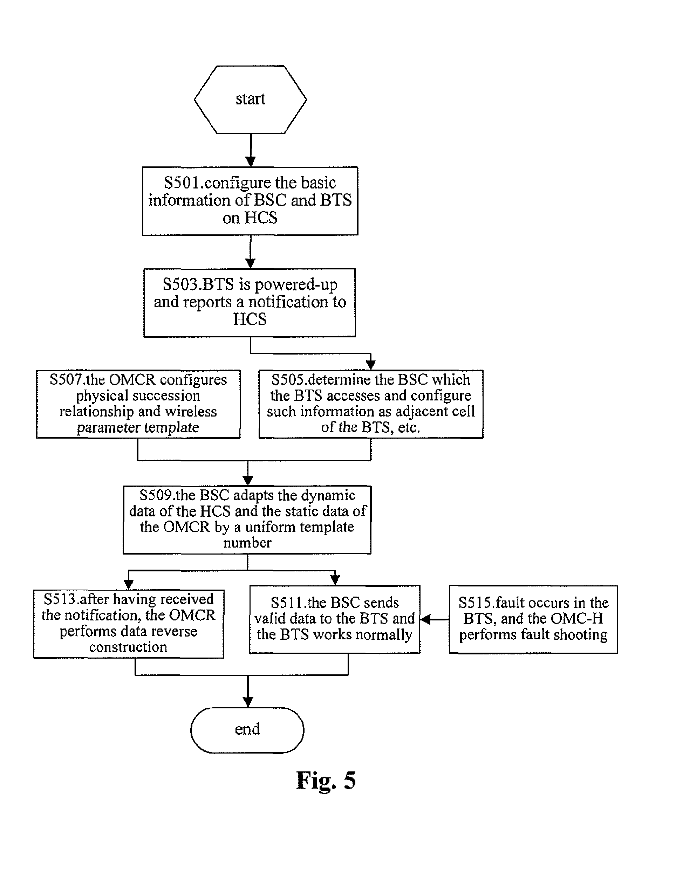

Fig. 5 is a flow chart of a method for configuring and managing network management data according to the preferred embodiment of the present invention. As shown in Fig. 5, the method for configuring network management data according to the preferred embodiment of the present invention comprises the following process (steps S501 to S515):
step S501: the basic information of the BSC and the BTS is configured on the HCS;
step S503: the BTS is powered-up and reports a notification to the HCS;
step S505: the HCS completes the configuration of dynamic information such as BTS frequency point, etc.; and at the same time the HCS determines the BSC which the BTS accesses, and provides corresponding access information to the BTS to ensure the normal access of the BTS, and the HCS configures information such as the adjacent cell of the BTS;
step S507: the OMCR configures the physical succession relationship and wireless parameter template;
step S509: the HCS and OMCR synchronize data to the BSC, and the BSC adapts the dynamic data of the HCS and the static data of the OMCR by a uniform template number;
step S511: the BTS sends an access request to the BSC, and the BSC sends valid data to the BTS by identity verification and data check; and at the same time, the BSC sends a message to the OMCR to perform data reverse construction;
step S513: after having received the above notification, the OMCR performs data reverse construction; and
step S515: when a fault occurs at the base station side and the complaint of a user is received, the OMC-H can acquire information such as the IP address of the BTS, etc. from the HCS, and perform fault shooting and information collection on the base station by means of remote connection.

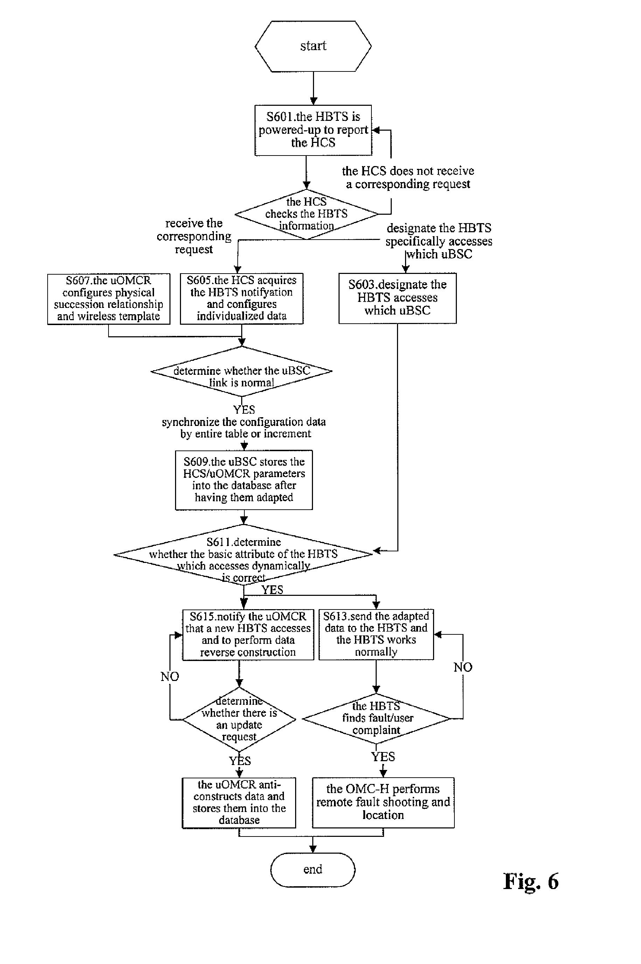

Fig. 6 is a flow chart of a method for configuring and maintaining network management data according to the example of the present invention. As shown in Fig. 6, in the example of the present invention, network management configuration and maintenance are performed with the pico base station system as the example, which includes the following process (steps S601 to 5615).

Before performing step S601, it is required to pre-configure the information of a micro base station controller (uBSC) and a home base station controller (HBTS) on the HCS.

In this case, an HCS module manages the uBSC objects and HBTS objects in the entire group network. First, the information of the HBTS to be accessed and the information of the uBSC that the HBTS is going to access are configured, wherein the information of the HBTS includes: the working frequency point information of the HBTS; and the information of the uBSC includes: the IP address, port number and CGI information of the uBSC necessary for the HBTS to access the uBSC.

Step S601: the HBTS is powered-up and reports a notification to the HCS.

During the specific implementation, after powered-up, the HBTS first sends a power-up request to the HCS, wherein this request carries the identification information of the HBTS for performing validity authentication on the HBTS identity; and it is further required to report the CGI information of the HBTS so that the HCS determines according to the CGI the BSC which the HBTS accesses.

Step S603: after having received the reported notification, the HCS determines by data check the BSC which the HBTS accesses and provides corresponding access information to the HBTS to ensure the normal access of the HBTS.

After having received the request of the HBTS, the HCS first determines that this HBTS information has been configured in the system and confirms the identity of the HBTS according to the attribute information carried by the HBTS. After it is successful, the pre-configured CGI information of the BSC is matched with the CGI information in the information reported by the HBTS, to determine the BSC which the HBTS needs to access. At the same time, the information of this BSC in combination with the pre-configured HBTS frequency point information is sent to the HBTS, as an access reply of the HBTS.

Step S605: the HCS configures information of the HBTS such as adjacent cell, etc.

During the specific implementation, after the HCS has completed the power-up reply of the HBTS, the HCS configures the corresponding adjacent cell parameter information of the HBTS. When configuring the adjacent cell parameter, it is further required to configure the corresponding template number of the adjacent cell parameter information.

The above template number is pre-configured (planned) according to different application scenarios. For example, when it is applied in a pico base station, the template number can be planned as 1001, such that when the HCS is configuring dynamic data (including adjacent cell parameter information), the template number configured synchronizedly is 1001. When the uOMCR is configuring static data, the template number configured synchronizedly must also be 1001. Only when the HCS and uOMCR synchronize data to the uBSC respectively, the uBSC can adapt the dynamic data and static data by the template number.

Step S607: the micro base station controller operation and maintenance center (uOMCR) configures the physical single board, succession relationship, and wireless parameter template. In the situation of establishing a link with the _{U}BSC, the data is synchronized to the _{U}BSC by means of the entire table or increment.

The uOMCR configures the succession relationship, office direction, wireless parameter template and template number of the physical single board. The template number and the adjacent cell information template number configured by the HCS are adaptation interfaces with uniform specifications, so that the uBSC can adapt data by the template number. Then, the configured static data is synchronized to the uBSC by means of the entire table synchronization.

Step S609: after having received the individualized parameter (such as adjacent cell parameter information) synchronized from the HCS side and the template data synchronized from the uOMCR side, the uBSC adapts the data of them by the template number and stores them into the database.

Step 5611: when the HBTS accesses the designated uBSC according to the information of uBSC acquired from the HCS side, a data check module of the uBSC will perform parameter check on the accessed HBTS and determine whether some basic parameters (parameters such as the link number, BSCII7 identification, etc.) of the HBTS itself are valid.

The uBSC sends work data (i.e. adapted data) to the HBTS by the data allocation module, and then sends a message to the data notification module to notify the uOMCR to perform data reverse construction. That is, it sends work data to the HBTS, which is the configuration parameter of the HBTS, and after configuration, a notification message is sent to the data notification module to notify the uOMCR to acquire the latest site data from the uBSC.

Step S613: after having acquired the data sent by the uBSC, the HBTS operates normally.

As to the HBTS, the configuration of the whole set of network management data is finished. After powered-up, the HBTS has already acquired the latest configuration data and begins the normal operation.

During the specific implementation, after the configuration is finished, there is still subsequent track and maintenance required. Since the dynamic data of the base station is configured by the HCS side, the whole adaptation operation is finished at the uBSC side. Therefore, the relevant data of the HBTS such as working frequency point, adjacent cell, etc. are not on the uOMCR. However, the uOMCR side is responsible for maintaining the whole set of network management configuration data and for providing relevant information for modules such as performance module, alarm module, etc. In order to ensure the consistence between the uOMCR data and uBSC data, data reverse construction is introduced. That is, when the uBSC sends the whole set of data to the HBTS, it is further required to send to the uOMCR a request for data reverse construction and adaptation .

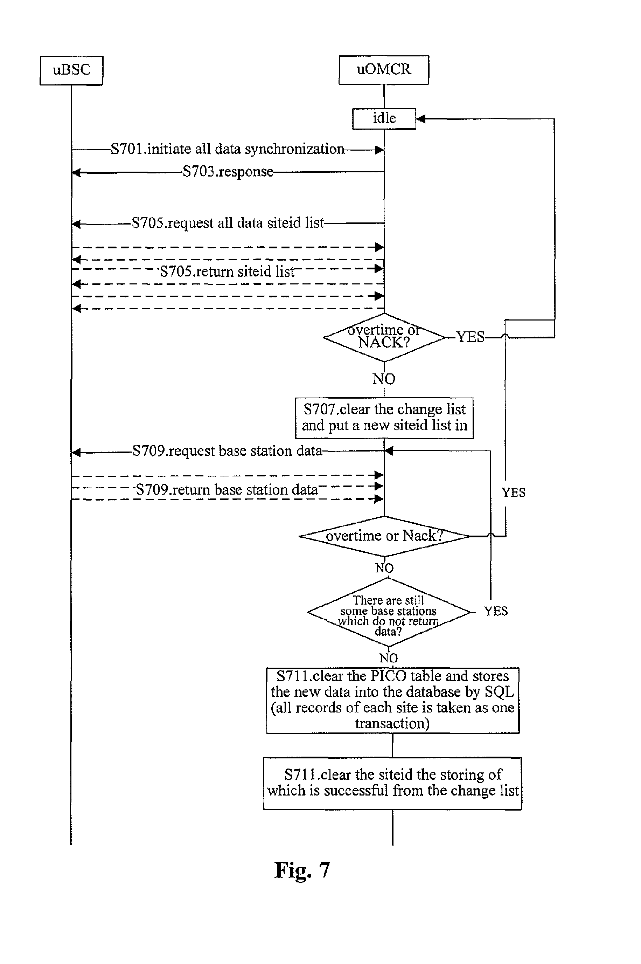

Step S615: after having obtained the data reverse construction request of the uBSC, the uOMCR performs data reverse construction automatically or manually, and synchronizes the latest site data of the uBSC to the database of the uOMCR. It is possible to refer to Fig. 7 for the specific sequence diagram of the data reverse construction.

Fig. 7 is a flow chart of a main sequence diagram of data reverse construction according to the example of the present invention. As shown in Fig. 7, the main sequence procedure of this data reverse construction mainly includes the following process (steps S701 to S711):
step S701: the uBSC initiates a whole data synchronization request;
step S703: the uOMCR replies an ACK message, wherein the ACK message indicates that the request of uBSC is received and the link is normal, being ready to perform data reverse construction;
step S705: the uOMCR initiates a whole data request and acquires the siteid change list returned by multiple packets of the uBSC;
step S707: the uOMCR clears the originally maintained change list in the memory and uses the latest acquired siteid change list to replace it;
step S709: the uOMCR initiates an acquiring data request to the uBSC according to the change list and acquires the data returned by all multiple packets; and
step 5711: the uOMCR clears the data from the PICO table (adaptation data table) and writes directly the latest acquired data into the database by SQL. Then, the data in the change list is deleted.

By the above embodiments, the static data is configured in the OMCR, the dynamic data is configured in the HCS, and a set of integrated data is adapted by the HSC, so that the configuration of all data is completed. It can effectively meet the data configuration requirements of the pico base station. Also, the data reverse construction function of the OMCR module can achieve management and maintenance on the consistence of all configuration data. And performing fault shooting on the BTS by means of remote connection can simplify the maintenance procedure and improve user experience.

In summary, by the above embodiments provided by the present invention, the solution for configuring and maintaining network management data provided by the present invention can be used to achieve the following technical effects: first, it is capable to timely acquire the relevant information of the pico base station and flexibly configure individualized wireless parameters such as frequency point, adjacent cell, etc. according to the network plan, wherein this individualized configuration and the operability of the network can fully address the requirements related to the features of the pico base station such as being small and flexible; second, the pico base station is of home-BTS type, and there are lots of base stations deployed in a wide range of positions; thus, after problems occurred in the pico base stations, the present method can be used to achieve the acquisition and analysis of relevant information of the base station by remote connection, so that it can be effectively achieved to locate and solve the fault; third, the configuration based on individualized parameters can effectively reduce frequent data synchronizations, thus the manual interference during the synchronization of network management data is reduced.

Apparently, those skilled in the art should understand that the above modules and steps of the present invention can be achieved by using general purpose calculating device, and can be integrated in one calculating device or distributed on a network which consists of a plurality of calculating devices. Alternatively, the modules and the steps of the present invention can be realized by using the executable program code of the calculating device, and thereby they can be stored in the storing device and executed by the calculating device. And in some cases, the steps shown or described can be carried out in a different order, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alterations and changes to the present invention are apparent to those skilled in the art. The scope defined in claims shall comprise any modification, equivalent substitution and improvement within the spirit and principle of the present invention.

## Claims

1. A method for configuring and managing network management data, **characterized by** comprising:
a base station controller (BSC) receiving dynamic data from a home-BTS configuration server (HCS), wherein the dynamic data carries adjacent cell parameter information of a base transceiver station (BTS), and the adjacent cell parameter information contains a pre-set template number;
the BSC receiving static data from an operation and maintenance center (OMCR) of the base station controller, wherein the static data carries a physical succession parameter and wireless parameter template information, and the static data contains a pre-set template number; and
the BSC adapting the static data and the dynamic data according to the pre-set template numbers in the dynamic data and the static data, and storing the static data and the dynamic data in a database of the BSC.

2. The method according to claim 1, **characterized in that** before the BSC receiving the dynamic data from the HCS, the method further comprises:
the HCS receiving a power-up request message from the BTS, wherein the power-up request message carries identification information and common gateway interface information of the BTS;
the HCS determining the BSC to be accessed by the BTS through data check;
the HCS sending identification information of the BSC to be accessed and pre-configured frequency point information of the BTS to the BTS, to achieve subsequent access; and
the HCS configuring the adjacent cell parameter information of the BTS.

3. The method according to claim 2, **characterized in that** after adapting the static data and the dynamic data, the method further comprises:
the BSC receiving an access request from the BTS;
the BSC establishing connection with the BTS after having performed identity verification on the BTS;
the BSC performing data check on parameter information from the BTS, wherein the parameter information of the BTS includes the identification information of the BSC; and
the BSC sending the adapted data to the BTS.

4. The method according to any one of claims 1 to 3, **characterized in that** after the BSC adapting the static data and the dynamic data and storing the static data and the dynamic data in the database of the BSC, the method further comprises:
the OMCR receiving a data reverse construction notification from the BSC; and
the OMCR acquiring latest site data from the database of the BSC and storing the latest site data into a database of the OMCR.

5. The method according to any one of claims 1 to 3, **characterized in that** when a fault occurs at the base station side, the method further comprises:
a home-BTS operation and maintenance center (OMC-H) acquiring the identification information and/or the common gateway interface information of the BTS from the HCS; and
the OMC-H establishing remote connection with the BTS according to the identification information and/or the common gateway interface information of the BTS, and performing a processing of fault shooting on the BTS.

6. A system for configuring and managing network management data, **characterized by** comprising:
a home-BTS configuration server (HCS), configured for sending dynamic data to a base station controller (BSC), wherein the dynamic data carries adjacent cell parameter information of a BTS, and the adjacent cell parameter information contains a pre-set template number;
an operation and maintenance center (OMCR) of the base station controller, configured for sending static data to the BSC, wherein the static data carries a physical succession parameter and wireless parameter template information, and the static data contains a pre-set template number; and
the BSC, configured for adapting the static data and the dynamic data according to the pre-set template numbers in the dynamic data and the static data and storing the static data and the dynamic data in a database of the BSC.

7. The system according to claim 6, **characterized in that**
the HCS is further configured for receiving a power-up request message from the BTS, determining the BSC to be accessed by the BTS through data check, sending the identification information of the BSC to be accessed and pre-configured frequency point information of the BTS to the BTS to achieve subsequent access, and configuring the adjacent cell parameter information of the BTS.

8. The system according to claim 7, **characterized in that**
the BSC is further configured for receiving an access request from the BTS, establishing connection with the BTS after having performed identity verification on the BTS, performing data check on parameter information from the BTS, and sending the adapted data to the BTS, wherein the parameter information of the BTS includes the identification information of the BSC.

9. The system according to any one of claims 6 to 8, **characterized in that**
the OMCR is further configured for acquiring the latest site data from a database of the BSC after having received a data reverse construction notification from the BSC and storing the latest site data into a database of the OMCR.

10. The system according to any one of claims 6 to 8, **characterized in that** the system further comprises:
a home-BTS operation and maintenance center (OMC-H), configured for acquiring identification information and/or common gateway interface information of the BTS from the HSC, establishing remote connection with the BTS according to the identification information and/or the common gateway interface information of the BTS, and performing a processing of fault shooting on the BTS.
